# EUROPEAN PATENT APPLICATION

(11) **EP 1 053 666 A1**
(43) Date of publication of application: **22.11.2000**
(21) Application number: 00201731.7
(22) Date of filing: 16.05.2000
(51) Int. Cl.: A01B 1/06, A01B 45/02

(54) **Weeding tool**

(30) Priority: 17.05.1999 EP 99201531
(71) Applicant: Oosterloo, Bert, 6267 AH Cadier en Keer (NL)
(72) Inventor: Oosterloo, Bert, 6267 AH Cadier en Keer (NL)
(74) Representative: Bleukx, Lucas Lodewijk M.

(57) **Abstract**

A weeding tool comprising support means (20) for moving the tool over the ground surface, and a rotatably driven shaft (10) which is provided with a number of cutting blades (13), the blades being connected in a hinged way to the rotating shaft (10), and the relative positioning between the axis and the support means (20) is such that in operation the outer end of the blades (13) just touches the ground surface.

## Description

The invention relates to a weeding tool comprising support means for moving the tool over the ground surface, and a rotatably driven shaft which is provided with a number of cutting blades, the blades being connected in a hinged way to the circumference of the shaft.

Such a tool is generally known e.g. for cutting grass and the like.

Up till now however a number of tools has been proposed for weeding, but none proved to be completely effective. Examples of such tools have been described in FR-A-2 648 007, US-A-4 256 183, US-A-4 421 176, GB-A-2 052 934, GB-A-2 161 682, EP-A-0 094 995, and WO-A-98 20 725. One of the problems encountered with these known weeding or cultivating tools is that it is extremely difficult to maintain constant the level of the cutting blades with respect to the ground surface. In most cases this level is defined by a pair of support rollers which when one of these rollers is either lowered temporarily by a hole in the ground surface or raised temporarily by a raising in the ground surface, the weeding is automatically influenced as well, resulting either in an insufficient welding or the generation of unwanted dust. This is caused by either the cuffing of the weed just above the ground level in which case the weed is able to recover easily, or under the ground level whereby a lot of dust is generated which makes the operation of the weeding tool unattractive.

It is therefor an object of the invention to provide a weeding tool in which these problems are avoided and which is more effective in removing weeds from gardens and the like.

These and other objects are obtained by means of a weeding tool according to the introductory part of the description in which the relative positioning between the shaft and the support means is such that in operation the outer end of the blades just touches the ground surface.

By adjusting the height in such a way, it becomes possible that the cutting blades cut the weeds on a level just at the ground level.

In a preferred embodiment of the invention the weeding tool is provided with support means which comprises two longitudinal support systems extending substantially perpendicular with respect to the shaft carrying the cutting blades.

In this way is becomes possible to keep the cuffing blades at a nearly constant level with respect to the ground surface and especially holes will not influence the height of the cutting blades with respect to the ground surfaces.

Preferably the support system comprises two longitudinal gliders extending near the ends of the shaft, or the support system comprises two longitudinal supports extending at the ends of the shaft and bearing a number of rotatably wheels engaging the ground surface and positioned in succession on each support.

Both these systems provide a good ground surface contact and ensure a stable height adjustment of the blades with respect to the ground surface.

Other characteristics and advantages of the invention will become clear from the following description, reference being made to the annexed drawing in which there is shown a schematic cross-section of a weeding tool according to the invention.

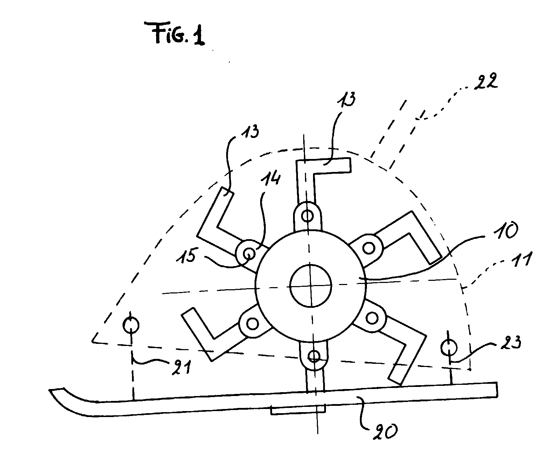

The weeding tool shown in the drawing comprises a rotatably mounted shaft 10 which can be driven by any suitable means (not shown). These driving means can be either an electric motor, which implies that the tool must either be connected to an electric power supply, or that the tool must be provided with an accumulator for electric energy, or an internal combustion motor as usually is used in lawn movers. Another type of engine might be a pneumatically driven engine, implying a supply pressurized air. The axis of the shaft 10 is supported upon the side walls of an housing 11, consisting of a hood-like part and two side walls, which housing serves as a protection of the rotating shaft 10.

The circumferential surface of the shaft 10 is provided with a number of cutting blades 13, each cutting blade having a L-shape, one leg of which being used as the cutting leg, the other leg being provided with a bore by means of which the cutting blade is hingedly connected to the shaft 10 by means of a pair of brackets 14 and a pen 15. As shown in the drawing a number of cuffing blades 13 has been provided, and as a result of the centrifugal force caused by the rotation of the shaft, the cutting blades take the position shown in the drawing. As seen along the axis of the shaft 10 the cutting blades may all be positioned in the same axial position, and have a length corresponding to approximately the length of the shaft 10. Alternatively the cutting blade 13 may have a reduced length, e.g. one sixth of the length of the shaft and each cuffing blade 13 being positioned in a different position as seen along the axis of the shaft 10, so that in fact they are positioned alongside each other as seen in the radial direction of the shaft 10. However it will be clear that the invention is not limited to this type of cuffing blades, but all suitably shaped cutting blades may be used, provided they offer a good cutting edge in order to cut the weed at the speed generated by the rotation of the shaft.

As shown in the drawing the weeding tool is supported by two gliders 20, only one of which has been shown in the drawing. Each glider is connected to the house side walls of the house 11 by means of rods 21 and 23. The rods 21 and 23 are connected to the housing 11 by means of rings pressing the rods against the side walls of the housing, so that the distance between the house 11 and the gliders 20 can be adjusted. The gliders 20 normally rest on the ground surface over which the weeding tool can slide in this way. The adjustment of the distance between the gliders and the shaft 11 may be required in order accommodate different types of cutting blades or to provide for compensation if the cutting blades are wearing off.

In another embodiment of the invention the gliders 20 may be provided with a number of small wheels which are positioned in line one behind the other. This can be very effective if the composition of the soil to be operated by means of the weeding tool according to the invention is sticky such that sliding over the gliders 20 might be cumbersome.

Any other alternative for supporting the weeding tool may be used, provided that it provides two longitudinal supports extending substantially perpendicular with respect to the rotating shaft and provides a support for the tool allowing it to closely follow the relief of the ground surface. This allows an accurate operation of the weeding. Such an extended glider surface also provides a sufficient surface allowing a smooth gliding of the tool over the ground surface.

As shown the cutting blades are adjusted in such a way that they substantially shear the ground surface. In this way the weed can be cut in a very effective way, and the amount of dust generated by that can be kept within acceptable limits.

The housing 11 is connected to a handle bar 22 by means of which the tool can be moved along the surface to be treated. This handle bar can be provided with handles for one or two hands operation, dependent of the size of the tool. Normally the tool will be operated as a pushing tool, but this is not necessary. If needed a roller may be provided parallel to the shaft 10 and the brazing of which is fixed to the gliders 20. This might improve the handling possibilities of the tool. It is also possible to have this roller driven by the same engine driving the shaft 10.

## Claims

1. A weeding tool comprising support means for moving the tool over the ground surface, and a rotatably driven shaft which is provided with a number of cutting blades, the blades being connected in a hinged way to the rotating shaft, characterized in that the relative positioning between the axis and the support means is such that in operation the outer end of the blades just touches the ground surface.

2. A weeding tool according to claim 1, characterized in that the support means comprises two longitudinal support systems extending substantially perpendicular with respect to the shaft carrying the cutting blades.

3. A weeding tool according to claim 2, characterized in that the support system comprises two longitudinal gliders extending at the ends of the shaft.

4. A weeding tool according to claim 2, characterized in that the support systems comprises two longitudinal supports extending at the ends of the shaft and bearing a number of rotatably wheels engaging the ground surface and positioned in succession on each support.

5. A weeding tool according to any one of the claims 2-4, characterized in that the relative positioning between the support system and the shaft is adjustable.
